(19) Europäisches Patentamt
European Patent Office
Office européen des brevets

(11) Publication number: **0 072 002**
**B1**

(12) # EUROPEAN PATENT SPECIFICATION

(45) Date of publication of patent specification: **10.04.85**

(51) Int. Cl.$^4$: **B 01 D 13/04**

(21) Application number: **82107143.8**

(22) Date of filing: **06.08.82**

(54) **High performance semipermeable composite membrane and process for producing same.**

(30) Priority: **07.08.81 JP 122921/81**

(43) Date of publication of application:
**16.02.83 Bulletin 83/07**

(45) Publication of the grant of the patent:
**10.04.85 Bulletin 85/15**

(84) Designated Contracting States:
**AT CH DE FR GB LI NL SE**

(58) References cited:
**EP-A-0 015 149**
**GB-A-2 064 367**
**US-A-3 904 519**

(73) Proprietor: **TORAY INDUSTRIES, INC.**
**2, Nihonbashi Muromachi 2-chome Chuo-ku**
**Tokyo 103 (JP)**

(72) Inventor: **Uemura, Tadahiro**
**18-2-502, Nagitsujihigashiura-cho**
**Yamashina-ku Kyoto-fu, 607 (JP)**
Inventor: **Kurihara, Masaru**
**15-B4-32, 2-chome, Sonoyama**
**Otsu-shi Shiga-ken, 520 (JP)**
Inventor: **Inoue, Tetsuo**
**Hie 740-1, Chuzu-cho**
**Yasu-gun Shiga-ken 520-24 (JP)**

(74) Representative: **Kador . Klunker . Schmitt-Nilson . Hirsch**
**Corneliusstrasse 15**
**D-8000 München 5 (DE)**

**EP 0 072 002 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a semipermeable composite membrane comprising;

(a) a microporous substrate,

(b) an intermediate transport layer comprising a crosslinked polymer made from a water-soluble polymer (x), formed upon and affixed to said microporous substrate,

(c) an ultrathin solute rejection barrier layer comprising (i) an inner portion affixed to said intermediate transport layer and comprising a cross-linked polymer made from the reaction product of a water soluble polymer (x) and a monomer (y) with a crosslinking agent (z), (ii) an outer portion affixed to said inner portion (i) and comprising a crosslinked polymer made from the monomer (y) with the crosslinking agent (z). Such a semipermeable composite membrane is described in GB—A—2064367.

The invention also relates to a process for producing such a membrane, and concerns particularly a novel and high advantageous semipermeable composite membrane having a high percentage solute rejection and which is especially useful for production of pure water from seawater and the recovery of valuable materials, and which has excellent resistance to degradation in the presence of chlorine.

In recent years liquid separation and purification systems utilizing reverse osmosis have been applied in many fields such as the desalination of seawater or other saline waters and in the recovery of valuable materials from waste liquids of various types.

Various semipermeable membranes are now being used in commercial reverse osmosis treatment of aqueous solutions, either for water purification or for concentration of liquid solutions, or both. Such semipermeable membranes include the early Loeb type membranes made of cellulose acetate by processes as described in U.S.—A—3,133,132 and US—A—3,133,137. The Loeb type membranes are asymmetric types and are characterized by a very thin, dense surface layer or skin that is supported upon an integrally attached, thicker supporting layer. However, the cellulose acetate Loeb type membranes are restricted as to their use and processability, largely because the membranes must permanently be kept wet; their effectiveness as reverse osmosis membranes is lost once the membranes are dried.

These membranes have also exhibited deficiencies such as alkaline or acidic degradation and biological degradations which result in short life. Furthermore, these membranes are not used widely in separation or recovery of valuable materials from liquid mixtures containing organic chemicals, because the membranes have low selectivity for valuable organic materials and poor resistance to the effects of organic solvents.

Other Loeb type membranes which are also used include membranes fabricated from polyamides (cf. eg. US—A—3,567,632), polyamide hydrazide, polyamide acid (JP—A—50—121,168), crosslinked polyamide (JP—A—52—152,879), polyimidazopyron, polybenzimidazol, polysulfonamide, polybenzimidazolon, polyarylene oxide, polyvinyl methyl ether, polyacrylonitrile, polyvinyl alcohol, polyhydroxy ethyl methacrylate, and polyvinylidene chloride, etc. However, the separation performance and the resistance to chemical degradation of these Loeb type membranes are all inferior to those of the cellulose acetate membranes.

When utilizing semipermeable membranes in the treatment of saline water, particularly the treatment of seawater, it is often necessary to treat the feed water with clorine, formalin or other disinfectants so as to guard against bacterial growth which could greatly impair the performance of the membranes as a result of fouling or the like. But these synthetic membranes have poor durability when exposed to chlorine, which quickly causes a chemical degradation of the membranes and shortens their useful life, accompanied by very low salt rejection, which results in inefficient operation.

In a later development, processes have been provided for preparing an ultrathin film or skin separately from a porous support layer.

Membranes thus prepared have become known as composite membranes. In preparing such membranes it is possible to tailor both the ultrathin film and the porous supporting layer in such a manner that each component possesses the most desirable properties. Processes for preparing composite membranes are described in US—A—4,277,344, 4,039,440, 4,005,012, 3,744,642 and 3,926,798 and in P.B. Reports Nos. 234,198 and 248,670.

Generally, these composite membranes have also exhibited deficiencies such as compaction resulting in short life, as well as undesirable low flux or solute rejection, having no resistance to chlorine, formalin or other disinfectants, all resulting in insufficient operation.

It is an object of this invention to provide a semi-permeable composite reverse osmosis membrane which provides excellent solute rejection and has excellent resistance to chlorine and formalin.

Another object of the invention is to provide a composite membrane which is not only capable of producing pure water from seawater but is also useful for the recovery of valuable materials from the waste water as well. A further object of this invention is to provide a method for making such a composite membrane which can be produced in simple steps and thus lends itself to commercial production.

Yet another object is to provide a method of controlling the membrane thickness of an ultrathin membrane to provide membranes of predetermined thickness ideally adaptable for usage in a wide variety of pressure conditions in service.

Other objects and advantages of this invention will appear in further detail hereinafter.

In accordance with this invention, a semipermeable composite membrane is provided, as described at

the beginning, characterised in that said water soluble polymer (x) has a reactive amino or hydroxyl groups, said monomer (y) has at least two amino groups on an aromatic nucleus comprising from 1 to 3 aromatic rings, and said crosslinking agent (z) has at least 3 acyl halide groups on an aromatic nucleus comprising from 1 to 3 aromatic rings.

The crosslinking agent is capable of reacting with the reactive groups of the water-soluble polymer and also of reacting with the amino groups of the monomer (y). The water-soluble polymer (a) and the crosslinking agent are essentially immiscible with one another whereby interfacial polymerization takes place among the water-soluble polymer, monomer, and the crosslinked agent to form an inner portion of the ultrathin layer. At the same time, some monomer migrates through the inner portion of the ultrathin layer and polymerizes with the crosslinked agent to form a crosslinked polymeric outer portion of the ultrathin layer on the aforementioned inner portion of the ultrathin layer.

By causing the polymerization in such an interfacial manner, the resulting polymer forms an ultrathin solute rejection barrier layer of surprising uniformity with respect to thickness. Further, by predetermining the amount and type of monomer present in the aqueous solution, the amount penetrating through the aforesaid inner portion of the ultrathin barrier is also determined, and this predetermines the thickness of the outer portion of the ultrathin barrier layer that will be produced from polymerization of the monomer with the crosslinking agent. In this surprising and highly effective manner, the overall thickness of the ultrathin solute rejection barrier layer can be accurately predicted and the uniformity of thickness of the resulting barrier is entirely unprecedented.

Thickness control is highly important because solute rejection barriers are utilized under various pressures in different fields of service. Where low values of solute rejection are sufficient, very thin barriers (10 nm (100 Å) or less) may be used at low pressures. On the other hand, barriers as thick as 10 nm (100 Å) or more may be provided in accordance with this invention, and these may be used under very high pressure with adequate solute rejection performance.

Examples of water-soluble polymers which are useful in the practice of this invention include amine modified polyepihalohydrin; polyethylene imine, polyepiaminohydrin and polyvinyl alcohol, preferably, water-soluble reaction products which are modified by reacting a polyepihalohydrin represented by the following formula (I) with an amine compound (II):

(I) $$-(-CH_2-\underset{\displaystyle CH_2X}{\underset{|}{CH}}-O-)_i-(-CH_2-CH_2-O-)_j-$$

wherein X is a halogen atom such as Cl, Br or I, and i and j are mole fractions which satisfy the following relations:

$i+j=1$
$0{,}2<i\leqq 1$
$0\leqq j<0.8$

The amine compound (II) which is to be reacted with a polyepihalohydrin (I) is a non-cyclic or cyclic polyamine containing:

1) 0 to 1 amino group,
2) more than 1 imino group and in which
3) the sum of the amino group and the imino groups is more than 2, wherein the amino group when present is bonded to a carbon atom and the imino groups are bonded to a carbon atom or to two different carbon atoms, the total number of carbon atoms being from 3 to 12.

The monomer which is used with the water-soluble polymer in the practice of this invention preferably fulfills the following requirements:

It is an aromatic polyamine containing at least 2 amino groups on an aromatic compound comprising 1 to 3 aromatic rings.

Examples of polyepihalohydrins represented by formula (I) include polyepichlorohydrin, polyepibromohydrin and polyepiiodohydrin. Examples of the monomer include phenylene diamine, diaminodiphenylether, diaminodiphenylsulfone, diaminodiphenylmethane, tetraaminodiphenylmethane, preferably m-phenylene diamine.

These polyepihalohydrins (I) may be modified by reacting them with amine compounds (II) according to the procedure well known in prior art, for example as described in US—A—4,056,510. Examples of the amine compound (II) being reacted with the polyepihalohydrins (I) are monomeric polyamine such as 4-(aminomethyl)piperidine, ethylene diamine, diaminopropane, diaminobutane, diaminopentane, diethylene triamine, dipropylene triamine, triethlene triamine, pentaethylene hexamine and the like, preferably 4-(aminomethyl)piperidine.

The mixture used for preparing the composite membrane of this invention is obtained by mixing the monomer and the polymer having amino groups or hydroxyl groups. However, an amine modified

polyepihalohydrin containing excess monomeric polyamine may be used to obtain a membrane with a wide variety of performance.

The mixing ratio of the polymer with the monomer is about 10% to 90% by weight of monomer in 90% to 10% by weight of polymer, preferably from 20% to 85% by weight of polymer and about 80% to 15% by weight of monomer. When the mixing ratio is substantially outside the 90%—10% ratio, the resulting composite membrane shows lower solute rejection or lower flux.

As will be described hereinafter, the semipermeable composite membrane of this invention comprises two crosslinked polymers, the ultrathin solute barrier is obtained by reacting the mixture with a crosslinking agent and the intermediate transport layer is obtained by heat crosslinking of the water-soluble polymer. Semipermeable composite membranes obtained from the crosslinked polymers have the fine structure of a two phase system, that is, an ultrathin solute barrier layer and an intermediate transport layer.

It is considered that the ultrathin solute barrier layer determines the solute rejection or permeability of the composite membrane, and that the intermediate transport layer is the layer adhering the ultrathin solute barrier to the microporous substrate.

When a membrane is prepared by using only the monomer and/or the monomeric polyamine, a fine structure attributable to the use of a two phase system does not form in the resulting semipermeable membrane, and the composite membrane does not have good separation performance. On the other hand, when a membrane is prepared by using only the water-soluble polymer having amino groups or hydroxyl groups (without the monomer or the monomeric polyamine), the membrane formed does have the fine structure of a two phase system, but the liquid separation performance of the resulting composite membrane is poor. Further, such membranes tend to deteriorate in the course of time, because the solute barrier layer of the semipermeable membrane is very thin and is prone to mechanical damage.

The thickness of the ultrathin solute barrier layer and the intermediate transport layer of the membrane may be controlled in a highly effective manner by altering the mixing ratio of the monomer to the water-soluble polymer. The performance of the composite membrane can be controlled to some degree by altering the thickness or the ultrathin solute barrier layer and the intermediate transport layer. The thickness of the ultrathin solute barrier layer is preferably within the range of 10 nm (100 Å) to 100 nm (1000 Å), more preferably from 15 nm (150 Å) to 50 nm (500 Å), and the thickness of the intermediate transport layer is preferably in the range of 10 nm (100 Å) to 3 μm, more preferably 10 nm (100 Å) to 2 μm. When the ultrathin solute barrier layer is less than about 10 nm (100 Å) in thickness, the composite membrane is prone to mechanical damage, and it is difficult to retain the separation performance of the membrane.

On the other hand, when the ultrathin solute barrier layer is thicker than about 100 nm (1,000 Å) the liquid permeation of the composite membrane decreases. Furthermore, when the thickness of the intermediate transport layer is outside the above range, the composite membrane has reduced liquid separation performance or undergoes a performance change, because the thickness of the intermediate transport layer is somewhat prone to unevenness and irregularity of the surface of the microporous substrate.

The sum of the thicknesses of the ultrathin solute barrier layer and the intermediate transport layer is preferably 15 nm (150 Å) to 3 μm.

Figure 1 is an electron microphotograph showing the fine structure of an ultrathin cross section of a semipermeable composite membrane according to one embodiment of the present invention.

This figure clearly indicates the fine structure of the membrane surface as examined with the aid of an electron microscope. The membrane surface was shadowed with Pt-Pd and carbon in a vacuum-depositing apparatus. The membrane was embedded with an epoxy resin, dyed with an $OsO_4$ solution and was sectioned by using an ultramicrotome with a diamond knife. The ultrathin membrane layer of approximately 30 nm (300 Å) thickness and the intermediate transport layer of about 20 nm (200 Å) thickness were examined by a Hitachi HU-12 Transmission Electron Microscope.

Figure 2 is an electron microphotograph similar to Figure 1 showing the fine structure of an ultrathin cross-section of a semipermeable composite membrane obtained by using a solution containing only the amine modified polyepihalohydrin. Figure 2 clearly shows that the ultrathin membrane layer is approximately 10 nm (100 Å) in this case. The magnifications of the microphotographs of Figure 1 and 2 are about 90,000 times for each. The microphotographs show that the ultrathin solute barrier layer of the membrane of Figure 1 is significantly thicker than the ultrathin solute barrier of Figure 2.

Figure 3 is a schematic cross-sectional drawing, greatly enlarged, showing further details regarding the nature of the ultrathin solute barrier layer and the manner in which it is formed.

Figure 4 is a schematic drawing similar to Figure 1 but on a less enlarged scale, showing a barrier of this invention in combination with a polysulfone substrate and a fabric.

The interfacial polycondensation method, well known as such, is used for fabrication of the semipermeable composite membranes of this invention. The method has been described in great detail by P. W. Morgan in "Condensation Polymers by Interfacial and Solution Methods", Intersciences Publishers, New York, 1965.

According to this method, the aqueous mixture of the water-soluble polymer having the reactive groups selected from amino and hydroxyl groups and the monomer is coated on a surface of the microporous substrate; thereafter the hydrophobic solution containing crosslinking agents whose acyl

halide groups are capable of reacting with the amino groups or hydroxyl groups is coated on but does not mix with the aqueous solution and forms a separate layer thereon. *In situ* interfacial polycondensation on the microporous substrate takes place between the immiscible solutions and produces an ultrathin surface coating possessing solute barrier characteristics.

The crosslinking agent acyl used in the practice of this invention are selected from the group consisting of the acid chlorides with at least three acyl halide groups, such as trimesoyl chloride, trimellitic acid chloride etc. They are dissolved in suitable solvents which are substantially immiscible with water, such as hexane, heptane, pentane, benzene, carbon tetrachloride, trifluorotrichloroethane, etc.

The microporous substrate may be formed as a flat sheet or as a tubular or hollow fibers, or in any other desired shape usually used for reverse osmosis separation processes, and the pores in the surface are preferably sized between 1 nm (10 Å) and 30 nm (300 Å). The pores tend to become gradually enlarged toward the back (supporting substrate) side. The aforementioned microporous substrate may be distinguished as an anisotropic membrane made from homopolymers or from blended polymers of polysulfone, chlorinated polyolefin, polyvinyl chloride, cellulose acetate, cellulose nitrate, etc. The most preferably material is polysulfone. Preparation of a polysulfone substrate is described in "Office of Saline Water Research and Development Progress Report" No. 359, Oct., 1968. Optimally, the microporous substrate is reinforced by a material selected from the group consisting of calendered woven fabric, calendered non-woven fabric, uncalendered woven fabric, uncalendered non-woven fabric, porous film and paper.

The aforementioned two phase system semipermeable membranes of this invention, composed of an ultrathin solute barrier layer and an intermediate transport layer can be obtained by using an aqueous solution containing the water-soluble polymer having reactive groups selected from amino and hydroxyl groups and the monomer, in which the concentration of the aforementioned polymer is preferably from 0.1% to 10% by weight, more preferably from 0,5% to 5% by weight. The concentration of the monomer is preferably within the range of 0.1% to 10% by weight, more preferably 0.5% to 5% by weight. As the result of these concentrations, a two-phase system having the desired thickness is readily and conveniently obtained. From these a composite membrane possessing excellent separation characteristics can be fabricated with good yield. By simply increasing the monomer content in the solution, the thickness of the resulting ultrathin barrier may also be increased.

The water-soluble polymer having the reactive groups selected from amino and hydroxyl groups and the monomer in the aqueous solution are converted to a water-insoluble crosslinked polymer made by interfacial reaction with the crosslinking agent contained in the hydrophilic phase. For this reaction one of a number of alkaline reagents, such as sodium hydroxide, potassium hydroxide, sodium carbonate, sodium bicarbonate, etc. may be added to remove by-products of the reaction, such as hydrogen chloride, etc. Further, catalysts such as crown ethers may be added for acceleration of the reaction. On the other hand, the optimum concentration of the crosslinking agent in the water immiscible solution is affected by the concentration of the water-soluble polymer having amino or hydroxyl groups and the monomer in the aqueous phase. The preferable concentration is between 0.1% to 10% by weight.

The microporous substrate covered with the ultrathin solute barrier layer, formed by the interfacial condensation reaction, is cured at a high temperature, which should not be so high as to break the microporous substrate. The temperature is preferably between 80°C and 150°C. As a result of this curing, the intermediate transport layer of water-soluble polymer of the aqueous phase becomes water-insoluble, forming an intermediate transport layer between the ultrathin solute barrier layer and the substrate. The semi-permeable ultrathin composite membrane becomes stabilized as to durability and separation characteristics. The ultrathin solute barrier layer is formed by interfacial condensation between the mixture of water-soluble polymer having the group selected from amino and hydroxyl groups and the monomer, and the crosslinking agent.

When the water-soluble polymer having the reactive group selected from amino and hydroxyl groups is the only species in the water solution, the ultrathin solute barrier layer formed in the same manner is not more than about 10 nm (100 Å) in thickness. On the other hand, when the monomer is the only species present, the ultrathin solute barrier layer attains a maximum thickness of only a few μm. Accordingly, the resulting semi-permeable composite membranes are of only very limited use in either case.

In view of the nature of the interfacial reaction, the monomer size, and the reactivity of the monomer and of the water-soluble polymer having amino or hydroxyl groups, the inner portion of the ultrathin solute barrier layer may be formed immediately after contact with the crosslinking agent, accompanied or followed by diffusion of the monomer only through the inner portion of the ultrathin solute barrier layer. Having penetrated the inner portion of the ultrathin layer, the monomer reacts with the crosslinking agent contained in the hydrophobic phase and thus forms additional polymer which is deposited upon the inner portion of the ultrathin solute barrier layer and increases its thickness accordingly.

Because of this phenomenon, the resulting thickness of the ultrathin solute barrier layer of this invention is greater than if only the water-soluble polymer having amino groups or hydroxyl groups is used. Also, such layer is thinner and more uniform than one produced by using a monomer only.

A protective layer later applied to the ultrathin solute barrier layer causes the composite membrane to be much more resistant to mechanical shocks. Water-soluble organic polymers such as polyvinyl alcohol (PVA), partially saponified polyvinyl acetate, polyvinyl pyrrolidone, polyacrylamide and polyacrylic acid, for

example, are useful for forming the protective layer. Addition of a polyfunctional halogenated compound to this water solution is sometimes useful for crosslinking the protective layer, resulting in good water resistance. The remaining polyfunctional reagents of the interfacial polycondensation on the ultrathin solute barrier layer are also useful for crosslinking the protective layer. The optimum thickness of the protective layer is 100 nm (1000 Å) to 20 µm when PVA is used.

Figure 3 of the drawings shows diagrammatically and greatly magnified a typical structure obtained according to this invention. The intermediate transport layer 10 is composed of a water-insoluble polymer formed from the water-soluble polymer of the aqueous layer which remains in place on the polysulfone substrate 11 and which was solidified and rendered water-insoluble by heating. Next to the intermediate transport layer 10 is the composite ultrathin solute rejection barrier 12; its inner layer 13 is formed by reaction of the water-soluble polymer plus the monomer with the crosslinking agent: a crosslinked product of all three. During these reactions the monomer also migrates in the direction of the arrow in Figure 3 from the aqueous phase through the inner layer 13 formed at the interface, and reacts with the crosslinking agents of the organic phase, producing the outer layer 14 of the ultrathin solute rejection barrier. This outer layer 14 is the crosslinked product of the monomer with the crosslinking agent. Number 15 designates the outer protective layer preferably applied subsequently.

Figure 4 shows the polysulfone substrate 11 supported by a fabric 16. This figure also shows the typically irregular surface 17 of the polysulfone substrate 11, which is difficult to provide with a thick uniform coating. The intermediate transport layer 10 admirably compensates for this surface roughness and is securely attached to the polysulfone layer while also providing an excellent, much more uniform supporting surface for the ultrathin solute barrier layer 12. In this manner thickness variations of layer 12 are minimized. For example, in a typical case a layer 12 may be provided with a maximum thickness of 50 nm (500 Å) and a minimum thickness of 20 nm (200 Å), which is highly significant in terms of barrier performances.

The following specific examples have been selected as illustrative of various ways in which this invention may be practised. They are not intended to define or to limit the scope of the invention, which is set forth in the appended claims.

In the examples which follow, solute rejection (%) and flux ($m^3/m^2$ day) are calculated as follows:

$$\text{solute rejection } (\%) = (C_1 - C_3)/C_1 \times 100$$

wherein
$C_1$ is the solute concentration in feed and
$C_3$ is the solute concentration in the permeate.

$$\text{flux } (m^3/m^2 \text{ day}) = Q/S$$

wherein
Q is the quantity of solvent passing through the membrane per day ($m^3$/day), and
S is the active membrane surface ($m^2$).

Example 1

A polyester woven fabric (taffeta) having a warp density of 35.43/cm (90/inch) and a weft density of 26.37/cm (67/inch), and having a thickness of 160 µm, woven by using 16,67 tex (150 denier multifilament 20 cm by 30 cm, was set on a glass plate. A dimethylformamide (DMF) solution containing 16% by weight polysulfone (Union Carbide Co. Ltd. Udel® P-3500) was applied to the glass plate at a thickness of about 200 µm, at room temperature (20°C). The product was immediately immersed in water containing 0.5% by weight of sodium dodecyl sulphate at room temperature for 5 minutes. The product was then washed for 1 hour, using pure water.

The resulting fiber reinforced polysulfone substrate (FR—PS) had about 210 µm thickness and had a pure water permeability of

$$\frac{0.005}{1.013\times10^5} \text{ to } \frac{0.001}{1.013\times10^5} \text{ g/cm}^2\text{. sec. Pa}$$

(0.005 to 0.001 g/$cm^2$ sec. atm.) under conditions of $1.013\times10^5$ Pa (1 kg/$cm^2$) driving pressure and a feed temperature of 25°C.

Analysis with electron microscope photographs, showed that the FR—PS possessed 600 pores $(\mu m)^2$ and each of the pores was between 10 nm (100 Å) to 50 nm (500 Å) in diameter. 120 grams of sodium iodide were dissolved in 80 grams of hot methyl ethyl ketone. To this, 92.5 grams of polyepichlorohydrin dissolved in 200 grams of methyl ethyl ketone were added, and the product was stirred at boiling temperature for 25 hours. The resulting solution was cooled to room temperature, filtered and 3000 grams of water were added. The precipitated polymer was washed in 500 grams of methanol and dried in a vacuum at 50°C for 10 hours to obtain a polyepiiodohydrin. 80% of the chloro groups were found in

chemical analysis to be changed to iodo groups. 12 grams of polyepiiodohydrin were dissolved in 100 grams of tetrahydrofuran and 10 grams of water and 35 grams of 4-(aminomethyl)piperidine were added. After stirring at 35°C for 6 hours, sulfuric acid was added dropwise to neutralize the resultant solution. 300 grams of methanol were added to the resulting solution, and a white precipitate was obtained. This precipitate was purified by use of four reprecipitations, each from a methanol and water solution (methanol/water=3/1). The product was then passed through an anionic ion exchange resin bed to remove the sulfuric acid base, and the polymeric substance was obtained. Infrared spectrum analysis and $^{13}C$ nuclear magnetic resonance showed that this polymer was a 4-(aminomethyl)piperidine modified polyepiiodohydrin (polyaminoether).

This polymer was stored in a refrigerator as a water solution. A water solution containing 1.0 wt% of the polyaminoether obtained above, 1.2 wt% of m-phenylene diamine and 0.12 wt% of 4-(aminomethyl)piperidine and a trichlorotrifluorethane solution containing 0.05 wt% of trimesoyl chloride were prepared.

The water solution was poured on a flat surface of a polysulfone microporous substrate, which was then placed in a vertical position for 30 seconds to drain off the excess solution. After this, the trichloro-trifluoroethane-trimesoyl chloride solution was also poured on the substrate on top of the aqueous solution, causing interfacial polymerization to occur. After 30 seconds, the excess solution was drained off in the same manner for 1 minute.

The membrane was then cured in a convection oven at 120°C for 10 minutes, crosslinking the water soluble polyaminoether to result in the formation of the intermediate transport layer. It was cooled at room temperature, and covered by 1 wt% polyvinyl alcohol solution. Excess solution was drained off while maintaining the membrane in a vertical position. The membrane was finally cured at 110°C in an oven for 10 minutes. The reverse osmosis performance of the resulting composite membrane was measured under the following conditions:

| | |
|---|---|
| Pressure: | $56\times1.013\times10^5$ Pa (56 $kg/cm^2$) |
| Feed Solution: | 3.5% NaCl aqueous solution |
| Temperature: | 25°C |

The composite membrane showed 99.4% salt rejection and 0.54 $m^3/m^2$ day water flux.

Example 2

The microporous polysulfone substrate which was prepared in Example 1 was coated with the aqueous solutions of Example 1 for 2 minutes. The substrate was then placed in a vertical position for 15 seconds to drain off the excess solution. After this the substrate was coated with the trichlorotrifluoroethane solution containing 0.05 wt% of trimesoyl chloride for 45 seconds. The membrane was cured in a convection oven at 120°C for 10 minutes after drying it in the air for 1 minute. It was cooled at room temperature, and covered by a 2 wt% polyvinyl alcohol solution. The membrane was finally cured at 100°C for 5 minutes. The reverse osmosis performance of the resulting polyamide composite membrane was measured under the following conditions:

| | |
|---|---|
| Pressure: | $56\times1.013\times10^5$ Pa |
| Feed Solution: | 3.5% seawater |
| Temperature: | 25°C |
| pH. | 6.5 |

The composite membrane showed 99.6% salt rejection and 0.48 $m^3/m^2$ day water flux.

After dipping the membrane in the 0.5 wt% aqueous formalin solution at room temperature for 96 hours, the membrane showed the performance of 99.4% salt rejection and 0.37 $m^3/m^2$ day under the same evaluation conditions.

An electron micrograph of the cross-section of the composite membrane shows that this membrane is composed of an intermediate transport layer of about 20 nm (200 Å) thickness on the microporous polysulfone substrate, of an ultrathin solute barrier layer of about 30 nm (300 Å) thickness and the protective layer, as shown in Figure 1.

Example 3

The microporous polysulfone substrate was prepared by using a DMF solution containing 12 wt% polysulfone according to the same procedure as in Example 1. The preparation of the membrane was otherwise the same as Example 1. The membrane performance of the membrane shows 98.2% salt rejection and 0.69 $m^3/m^2$ day water flux.

Example 4

The composite membrane obtained in Example 1 was tested in the presence of 0.2 ppm chlorine in the feed solution for 2,000 hours under the following conditions;

| | |
|---|---|
| Pressure: | $56 \times 1.013 \times 10^5$ Pa (56 $kg/cm^2$) |
| Feed Solution: | 3.5% seawater |
| Temperature: | 25°C |
| pH: | 6.5 |

Test results are shown in table 1.

TABLE 1

| Elapsed time (h) | Salt rejection (%) | Water flux ($m^3/m^2$ day) |
|---|---|---|
| 24 | 99.90 | 0.35 |
| 500 | 99.90 | 0.34 |
| 1,300 | 99.87 | 0.32 |
| 2,000 | 99.85 | 0.30 |

Comparative Example 1 and 2

An aqueous solution containing only 2 wt% of m-phenylene diamine was poured on the microporous polysulfone substrate obtained in Example 1 and Example 3, which was then placed in a vertical position for 30 seconds to drain off the excess solution. After this, the trichlorotrifluoroethane solution containing 0.1 wt% of trimesoylchloride was also poured on the substrate on top of the aqueous solution for 30 seconds. The resulting membrane was then dried in air at room temperature. The test results of the reverse osmosis performances are shown in Table 2 under the same conditions as in Example 2.

TABLE 2

| Comparative example | Polysulfone substrate | Membrane performances* | |
|---|---|---|---|
| | | untreated | treated** |
| 1 | Example 1 | 99.3—0.65 | 93.0—0.01 |
| 2 | Example 3 | 40.0—1.20 | — |

*(rejection(%)-flux($m^3/m^2$ day))

**treated by the 0.5 wt% aqueous formalin solution at room temperature for 96 hours.

Example 5

Polyethylene imine was used instead of the amine modified polyepihalohydrin of Example 1. The composite membrane was prepared by the same procedure as in Example 1 and tested under the same conditions as in Example 1. The test results showed 99.30% salt rejection, and 0.32 $m^3/m^2$ day water flux.

Example 6 and Comparative Example 3 to 4

The composite membranes were prepared by the same procedure as in Example 2 or Comparative Example 2, except that the factors shown in Table 3 and a mixture of trimesoyl chloride and 0.1 wt% of isophtaloyl chloride instead of trimesoylchloride were used. The ratio of trimesoyl chloride and the isphtaloyl chloride is 1 on weight base. Reverse osmosis performances were tested under the same conditions as in Example 2.

TABLE 3

| | Example 6 | Comparative example 3 | Comparative example 4 |
|---|---|---|---|
| Polyethylene imine (wt%) | 1.0 | 2.0 | 0.0 |
| m-Phenylene diamine (wt%) | 1.0 | 0.0 | 2.0 |
| Salt rejection (%) | 99.35 | 85.0 | 40.0 |
| Water flux ($m^3/m^2$ day) | 0.35 | 0.85 | 1.28 |

Example 7

0.2 wt% of polyvinyl alcohol and 0.2 wt% of 4-(aminomethyl)piperidine were used instead of amine modified polyepihalohydrin as in Example 2.

The performance of the membrane made from these solutions, prepared as in Example 2, was measured under the same conditions as in Example 2. The membranes showed 98.7% salt rejection and 0.42 $m^3/m^2$ day water flux.

Comparative Example 5

An aqueous solution containing 2 wt% of amine modified polyepihalohydrin prepared as in Example 1 and 0.5 wt% of 4-(aminomethyl)piperidine was prepared. The composite membrane prepared from this solutions and an n-hexane solution containing 0.2 wt% isophthaloyl chloride as in Example 2 were tested under the same conditions as in Example 2. The membrane showed 99.6% salt rejection and 0.35 $m^3/m^2$ day water flux. After testing this membrane under the same conditions as in Example 4 for 500 hours, the membrane performance changed from the performance above to 98.6% salt rejection and 0.27 $m^3/m^2$ day water flux.

**Claims**

1. A semipermeable composite membrane comprising;

(a) a microporous substrate,

(b) an intermediate transport layer comprising a crosslinked polymer made from a water-soluble polymer (x), formed upon and affixed to said microporous substrate,

(c) an ultrathin solute rejection barrier layer comprising (i) an inner portion affixed to said intermediate transport layer and comprising a cross-linked polymer made from the reaction product of a water soluble polymer (x) and a monomer (y) with a crosslinking agent (z), (ii) an outer portion affixed to said inner portion (i) and comprising a crosslinked polymer made from the monomer (y) with the crosslinking agent (z), characterised in that said water-soluble polymer (x) has reactive amino or hydroxyl groups, said monomer (y) has at least two amino groups on an aromatic nucleus comprising from 1 to 3 aromatic rings, and said crosslinking agent (z) has at least 3 acyl halide groups on an aromatic nucleus comprising from 1 to 3 aromatic rings.

2. The membrane defined in claim 1, wherein said layer (c) has a controlled and substantially uniform thickness of 10 to 100 nm (100 to 1,000 Å).

3. The membrane defined in Claim 1, wherein said water-soluble polymer (x) is selected from the group consisting of amine modified polyepihalohydrin, polyethylene imine, polyepiaminohydrin and polyvinyl alcohol.

4. The membrane defined in Claim 3, wherein said amine modified polyepihalohydrin is a modified polymer made by reacting at least one polyepihalohydrin represented by the formula (I);

(I) $$-(CH_2-\underset{\displaystyle CH_2X}{\underset{|}{CH}}-O)_i-(CH_2-CH_2-O)_j-$$

wherein the X is a halogen selected from the group consisting of Cl, Br and I, and i and j are mole fractions and satisfy the following relationships:

$i+j=1$
$0,2<i\leqq 1$
$0\leqq j<0.8$

with at least one monomeric polyamine (II) which is a non-cyclic or cyclic polyamine containing:

1) 0 to 1 amino group,
2) more than 1 imino group, and in which
3) the sum of the amino group and the imino groups is more than 2, wherein the amino group when present is bonded to a carbon atom and the imino groups are bonded to one carbon atom or to two different carbon atoms, the total number of carbon atoms being 3 to 12.

5. The membrane defined in Claim 4, wherein the monomeric polyamine (II) is 4-(aminomethyl)piperidine.

6. The membrane defined in Claim 1, wherein the monomer (y) is selected from the group consisting of phenylene diamine, diaminodiphenylether, diaminodiphenylsulfone, diaminodiphenylmethane and tetraaminodiphenylmethane.

7. The membrane defined in Claim 1, wherein the said crosslinking agent (z) is selected from the group consisting of trimesoyl chloride and trimellitic acid chloride.

8. The membrane defined in Claim 1, wherein said membrane intermediate transport layer has a thickness of 10 nm (100 Å) to 3 μm.

9. The membrane defined in Claims 1 and 8, wherein said ultrathin solute barrier layer (c) is 10 nm (100 Å) to 100 nm (1000 Å) in thickness.

10. The membrane defined in Claim 1, wherein said microporous substrate (a) comprises an organic polymer selected from the group consisting of polysulfone, chlorinated polyolefin, cellulose acetate and polyvinyl chloride, being optimally reinforced by a material selected from the group consisting of calendered woven fabric, calendered non-woven fabric, uncalendered woven fabric, uncalendered non-woven fabric, porous film and paper.

11. The membrane defined in Claim 1, wherein the membrane is protected by a crosslinked polymer selected from the group consisting of polyvinyl alcohol, partially saponified polyvinyl acetate, and polyvinyl pyrrolidone.

12. The membrane defined in Claim 11, wherein the protective coating has a thickness of 100 nm (1000 Å) to 20 μm.

13. A process for producing a semipermeable composite membrane according to any of claims 1 to 10 comprising the steps of:

(1) covering the surface of (a) a microporous substrate with an aqueous solution containing at least (x) one water-soluble polymer having reactive amino or hydroxyl groups, said aqueous solution also containing (y) the monomer having at least two amino groups on an aromatic nucleus comprising 1 to 3 aromatic ring (5);

(2) covering the resulting coated porous substrate with a solution which is substantially immiscible with the solution of step (1) and which contains (z) a crosslinking agent having at least 3 acyl halide groups on an aromatic nucleus comprising 1 to 3 aromatic rings and being capable of undergoing interfacial polymerization with said reactive groups of the water-soluble polymer and with said monomer to form an ultrathin film on said surface of said microporous substrate;

(c) continuing said interfacial polymerization reaction for a time sufficient to cause migration of at least a portion of said monomer through the inner portion of the ultrathin film, thereby reacting with said crosslinking agent to form an outer portion of the ultrathin polymeric layer on the inner portion of the ultrathin layer being formed; and

(d) drying the resulting composite semipermeable membrane for a time sufficient to crosslink said water-soluble polymer.

14. The process defined in claim 13, wherein the mixing ratio of the polymer (x) with the monomer (y) in the aqueous solution of step 1 is 10% to 90% by weight of the water soluble polymer in 90% to 10% by weight of the monomer.

15. The process defined in Claims 13 and 14, wherein the concentration of both the polymer (x) and the monomer (y) in the aqueous solution of step 1 is in the range of 0.1% to 10% by weight.

**Revendications**

1. Membrane composite semi-perméable comprenant:

(a) un substrat microporeux,

(b) une couche de transport intermédiaire comprenant un polymère réticulé fabriqué à partir d'un polymère soluble dans l'eau (x), formé sur et fixé au substrat microporeux,

(c) une couche ultramince de barrière de rejet de soluté comprenant (i) une partie intérieure fixée à la couche de transport intermédiaire et comprenant un polymère réticulé fabriqué à partir du produit réactionnel d'un polymère soluble dans l'eau (x) et d'un monomère (y) avec un agent de réticulation (z), (ii) une partie extérieure fixée à la partie intérieure (i) et comprenant un polymère réticulé fabriqué à partir du monomère (y) avec l'agent de réticulation (z), caractérisée en ce que le polymère soluble dans l'eau (x) a des groupes réactifs amino ou hydroxyles, le monomère (y) a au moins deux groupes amino sur un noyau aromatique comprenant 1 à 3 cycles aromatiques, et l'agent de réticulation (z) a au moins 3 groupes halogénures d'acyle sur un noyau aromatique comprenant 1 à 3 cycles aromatiques.

2. Membrane selon la revendication 1, dans laquelle la couche (c) a une épaisseur contrôlée et sensiblement uniforme de 10 à 100 nm (100 à 1000 Å).

3. Membrane selon la revendication 1, dans laquelle le polymère soluble dans l'eau (x) est choisi dans le groupe se composant de polyépihalohydrine modifiée par une amine, de polyéthylèneimine, de polyépiaminohydrine et d'alcool polyvinylique.

4. Membrane selon la revendication 3, dans laquelle la polyépihalohydrine modifiée par une amine est un polymère modifié fabriqué en faisant réagir au moins une polyépihalohydrine représentée par la formule (I):

(I)
$$-(CH_2-\underset{\displaystyle CH_2X}{\underset{|}{CH}}-O)_i-(CH_2-CH_2-O)_j-$$

où X est un halogène choisi dans le groupe se composant de Cl, Br et I, et i et j sont des fractions molaires et satisfont aux relations suivantes:

$i+j=1$
$0,2<i\leqq 1$
$0\leqq j<0,8$

avec au moins une polyamine monomère (II) qui est une polyamine cyclique ou non cyclique contenant:

1) 0 à 1 groupe amino,
2) plus d'un groupe imino, et dans laquelle
3) la somme du groupe amino et des groupes imino est supérieure à 2, où le groupe amino quand il est présent est lié à un atome de carbone et les groupes imino sont liés à un atome de carbone ou à deux atomes de carbone différents, le nombre total d'atomes de carbone étant 3 à 12.

5. Membrane selon la revendication 4, dans laquelle la polyamine monomère (II) est la 4-(aminométhyl)pipéridine.

6. Membrane selon la revendication 1, dans laquelle le monomère (y) est choisi dans le groupe se composant de phénylènediamine, d'éther de diaminodiphényle, de diaminodiphénylsulfone, de diaminodiphénylméthane et de tétraaminodiphénylméthane.

7. Membrane selon la revendication 1, dans laquelle l'agent de réticulation (z) est choisi dans le groupe se composant de chlorure de trimésoyle et de chlorure d'acide trimellitique.

8. Membrane selon la revendication 1, dans laquelle la couche de transport intermédiaire de membrane a une épaisseur de 10 nm (100 Å) à 3 µm.

9. Membrane selon les revendications 1 et 8, dans laquelle la couche ultramince de barrière de soluté (c) a une épaisseur de 10 nm (100 Å) à 100 nm (1000 Å).

10. Membrane selon la revendication 1, dans laquelle le substrat microporeux (a) comprend un polymère organique choisi dans le groupe se composant de polysulfone, de polyoléfine chlorée, d'acétate de cellulose et de chlorure de polyvinyle, étant renforcé de manière optima par une matière choisie dans le groupe se composant de tissu tissé calendré, de tissu non tissé calandré, de tissu tissé non calandré, de tissu non tissé non calandré, de film poreux et de papier.

11. Membrane selon la revendication 1, dans laquelle la membrane est protégée par un polymère réticulé choisi dans le groupe se composant d'alcool polyvinylique, d'acétate de polyvinyle partiellement saponifié et de polyvinylpyrrolidone.

12. Membrane selon la revendication 11, dans laquelle le revêtement de protection a une épaisseur de 100 nm (1000 Å) à 20 µm.

13. Procédé de production d'une membrane composite semi-perméable selon l'une quelconque des revendications 1 à 10, consistant:

(1) à recouvrir la surface de (a) un substrat microporeux avec une solution aqueuse contenant au moins (x) un polymère soluble dans l'eau ayant des groupes réactifs amino ou hydroxyles, cette solution aqueuse contenant aussi (y) le monomère ayant au moins deux groupes amino sur un noyau aromatique comprenant 1 à 3 cycles aromatiques (5):

(2) à recouvrir le substrat poreux revêtu résultant avec une solution qui est sensiblement non miscible avec la solution de l'étape (1) et qui contient (z) un agent de réticulation ayant au moins 3 groupes halogénures d'acyle sur un noyau aromatique comprenant 1 à 3 cycles aromatiques et étant capable de subir la polymérisation interfaciale avec les groupes réactifs du polymère soluble dans l'eau et avec le monomère pour former un film ultramince à la surface du substrat microporeux;

(c) à poursuivre la réaction de polymérisation interfaciale pendant un temps suffisant pour provoquer la migration d'au moins une partie du monomère à travers la partie intérieure du film ultramince, en faisant réagir ainsi avec l'agent de réticulation pour former une partie extérieure de la couche polymère ultramince sur la partie intérieure de la couche ultramince formée; et

(d) à sécher la membrane semi-perméable composite résultante pendant un temps suffisant pour réticuler le polymère soluble dans l'eau.

14. Procédé selon la revendication 13, dans lequel pe rapport de mélange du polymère (x) avec le monomère (y) dans la solution aqueuse de l'étape 1 est 10% à 90% en poids de polymère soluble dans l'eau dans 90% à 10% en poids du monomère.

15. Procédé selon les revendications 13 et 14, dans lequel la concentration du polymère (x) et du monomère (y) dans la solution aqueuse de l'étape 1 est dans la gamme de 0,1 à 10% en poids.

**Patentansprüche**

1. Semipermeable Verbund-Membran mit

(a) einem mikroporösen Substrat,

(b) einer Transport-Zwischenschicht mit einem vernetzten Polymeren, das aus einem wasserlöslichen Polymeren (x) hergestellt ist, die auf dem mikroporösen Substrat ausgebildet und an dieses fixiert ist,

(c) einer ultradünnen Sperrschicht zum Zurückhalten gelöster Stoffe mit (i) einem inneren Bereich, der an die genannte Transport-Zwischenschicht fixiert ist und ein vernetztes Polymeres umfaßt, das aus dem Reaktionsprodukt eines wasserlöslichen Polymeren (x) und eines Monomeren (y) mit einem Vernetzungsmittel (z) hergestellt ist, und (ii) einem äußeren Bereich, der an den genannten inneren Bereich (i) fixiert ist und ein vernetztes Polymeres umfaßt, das aus dem Monomeren (y) mit dem Vernetzungsmittel (z) hergestellt ist, dadurch gekennzeichnet, daß das genannte wasserlösliche Polymere (x) reaktive Amino- oder Hydroxyl-Gruppen aufweist, da genannte Monomere (y) wenigstens zwei Amino-Gruppen an einem aromatischen Kern mit von 1 bis 3 aromatischen Ringen aufweist und das genannte Vernetzungsmittel (z) wenigstens 3 Acylhalogenid-Gruppen an einem aromatischen Kern mit von 1 bis 3 aromatischen Ringen aufweist.

2. Membran nach Anspruch 1, bei der die genannte Schicht (c) eine kontrollierte und im wesentlichen gleichförmige Dicke von 10 bis 100 nm (100 bis 1 000 Å) aufweist.

3. Membran nach Anspruch 1, in der das genannte wasserlösliche Polymere (x) aus der Gruppe ausgewählt ist, die aus einem aminmodifizierten Polyepihalogenhydrin, Polyethylenimin, Polyepiaminohydrin und Polyvinylalkohol besteht.

4. Membran nach Anspruch 3, bei der das genannte aminmodifizierte Polyepihalogenhydrin ein modifiziertes Polymeres ist, das dadurch hergestellt ist, daß man wenigstens ein Polyepihalogenhydrin der Formel (I)

(I) $$-(CH_2-\underset{\displaystyle CH_2X}{\underset{|}{CH}}-O)_i-(CH_2-CH_2-O)_j-$$

in der X ein Halogen ist, das aus der Gruppe ausgewählt ist, die aus Cl, Br und I besteht, und i und j Molenbrüche sind und die folgenden Beziehungen erfüllen:

$i+j=1$
$0{,}2<i\leqq 1$
$0\leqq j<0{,}8$

mit wenigstens einem monomeren Polyamin (II) umsetzt, das ein nicht-cyklisches oder cyklisches Polyamin ist, das enthält:

1) 0 bis 1 Amino-Gruppe,
2) mehr als eine Imino-Gruppe, und in dem
3) die Summe aus der Amino-Gruppe und den Imino-Gruppen größer als 2 ist, worin die Aminogruppe, soweit sie vorhanden ist, an ein Kohlenstoffatom gebunden ist und die Iminogruppen an ein Kohlenstoffatom oder zwei unterschiedliche Kohlenstoffatome gebunden sind, wobei die Gesamtzahl der Kohlenstoffatome 3 bis 12 beträgt.

5. Membran nach Anspruch 4, bei der das monomere Polyamin (II) 4-(Aminomethyl)piperidin ist.

6. Membran nach Anspruch 1, bei der das Monomere (y) aus der Gruppe ausgewählt ist, die aus Phenylendiamin, Diaminodiphenylether, Diaminodiphenylsulfon, Diaminodiphenylmethan und Tetraaminodiphenylmethan besteht.

7. Membran nach Anspruch 1, in der das genannte Vernetzungsmittel (z) aus der Gruppe ausgewählt ist, die aus Trimesoylchlorid und Trimellitsäurechlorid besteht.

8. Membran nach Anspruch 1, in der die genannte Transport-Zwischenschicht der Membran eine Dicke von 10 nm (100 Å) bis 3 µm aufweist.

9. Membran nach den Ansprüchen 1 und 8, bei der die genannte ultradünne Sperrschicht für gelöste Stoffe (c) eine Dicke von 10 nm (100 Å) bis 100 nm (1000 Å) aufweist.

10. Membran nach Anspruch 1, in der das genannte mikropörose Substrat (a) ein organisches

Polymeres umfaßt, das aus der Gruppe ausgewählt ist, die aus einem Polysulfon, chlorierten Polyolefin, Celluloseacetat und Polyvinylchlorid besteht, wobei es optimal durch ein Material verstärkt ist, das aus der Gruppe ausgewählt ist, die aus einem kalandrierten gewebten Gewebe, einem kalandrierten nichtgewebten Gewebe, einem nicht-kalandrierten gewebten Gewebe, einem nicht-kalandrierten nichtgewebten Gewebe, einer porösen Folie und Papier besteht.

11. Membran nach Anspruch 1, wobei die Membran von einem vernetzten Polymeren geschützt ist, das aus der Gruppe ausgewählt ist, die aus Polyvinylalkohol, teilweise verseiftem Polyvinylacetat und Polyvinylpyrrolidon besteht.

12. Membran nach Anspruch 11, wobei der Schutzüberzug eine Dicke von 100 nm (1000 Å) bis 20 μm aufweist.

13. Verfahren zur Herstellung einer semipermeablen Verbundmembran nach einem der Ansprüche 1 bis 10 mit den Schritten:

(1) Bedecken der Oberfläche von (a) einem mikroporösen Substrat mit einer wäßrigen Lösung, die wenigstens (x) ein wasserlösliches Polymeres mit reaktiven Amino- oder Hydroxyl-Gruppen enthält, wobei die genannte wäßrige Lösung auch (y) das Monomere mit wenigstens 2 Amino-Gruppen an einem aromatischen Kern mit 1 bis 3 aromatischen Ringen (5) enthält;

(2) Bedecken des gebildeten überzogenen porösen Substrats mit einer Lösung, die im wesentlichen mit der Lösung von Stufe (1) unmischbar ist und die (z) ein Vernetzungsmittel mit wenigstens 3 Acylhalogenid-Gruppen an einem aromatischen Kern mit 1 bis 3 aromatischen Ringen enthält, das in der Lage ist, in einer Grenzflächenpolymerisation mit den genannten reaktiven Gruppen des wasserlöslichen Polymeren und mit dem genannten Monomeren unter Bildung eines ultradünnen Films auf der genannten Oberfläche des genannten mikroporösen Substrats zu reagieren;

(c) Fortsetzung der genannten Grenzflächen-Polymerisations-reaktion für eine solche Zeit, die ausreicht, eine Wanderung von wenigstens einem Teil des genannten Monomeren durch den inneren Bereich des ultradünnen Films zu bewirken, wodurch es mit dem genannten Vernetzungsmittel unter Bildung eines äußeren Bereichs der ultradünnen Polymerschicht auf dem inneren Bereich der ultradünnen gebildeten Schicht reagiert; und

(d) Trocknen der gebildeten semipermeablen Verbundmembran für eine Zeit, die ausreicht, das genannte wasserlösliche Polymere zu vernetzen.

14. Verfahren nach Anspruch 13, bei dem das Mischungsverhältnis des Polymeren (x) mit dem Monomeren (y) in der wäßrigen Lösung von Stufe 1 10 bis 90 Gew.-% des wasserlöslichen Polymeren in 90 bis 10 Gew.-% des Monomeren entspricht.

15. Verfahren nach den Ansprüchen 13 und 14, wobei die Konzentration sowohl des Polymeren (x) und des Monomeren (y) in der wäßrigen Lösung von Stufe 1 im Bereich von 0,1 bis 10 Gew.-% liegt.

FIG. 1

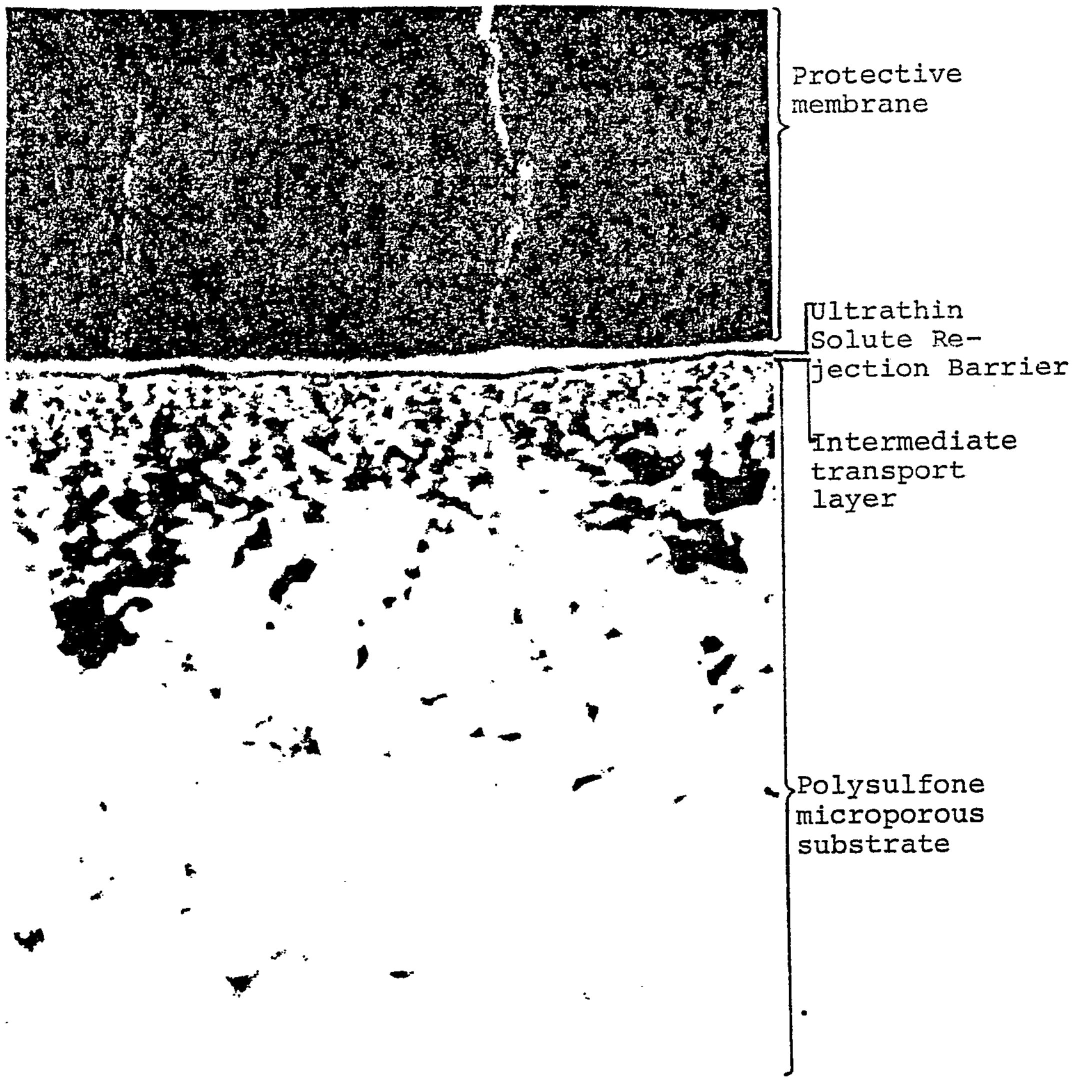
Protective membrane
Ultrathin Solute Re-jection Barrier
Intermediate transport layer
Polysulfone microporous substrate

FIG. 2

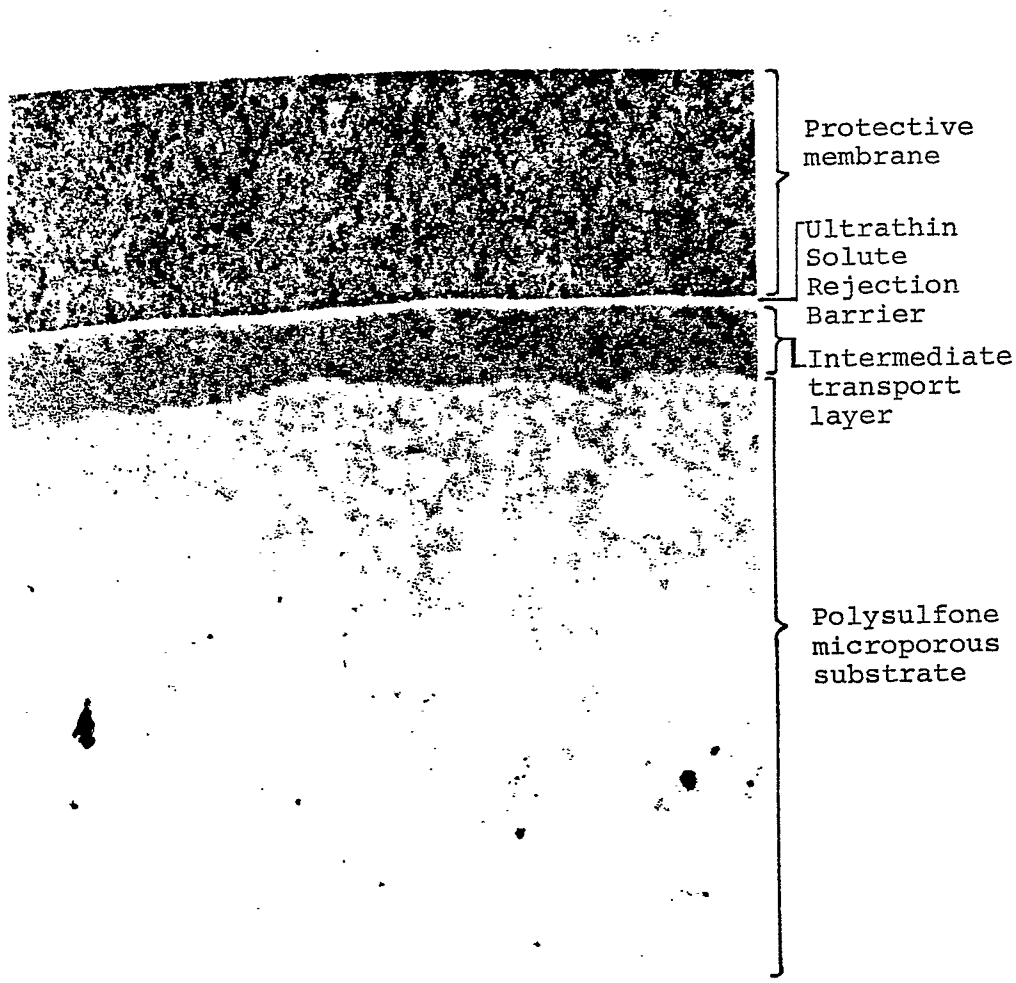
Protective membrane
Ultrathin Solute Rejection Barrier
Intermediate transport layer
Polysulfone microporous substrate

FIG. 3

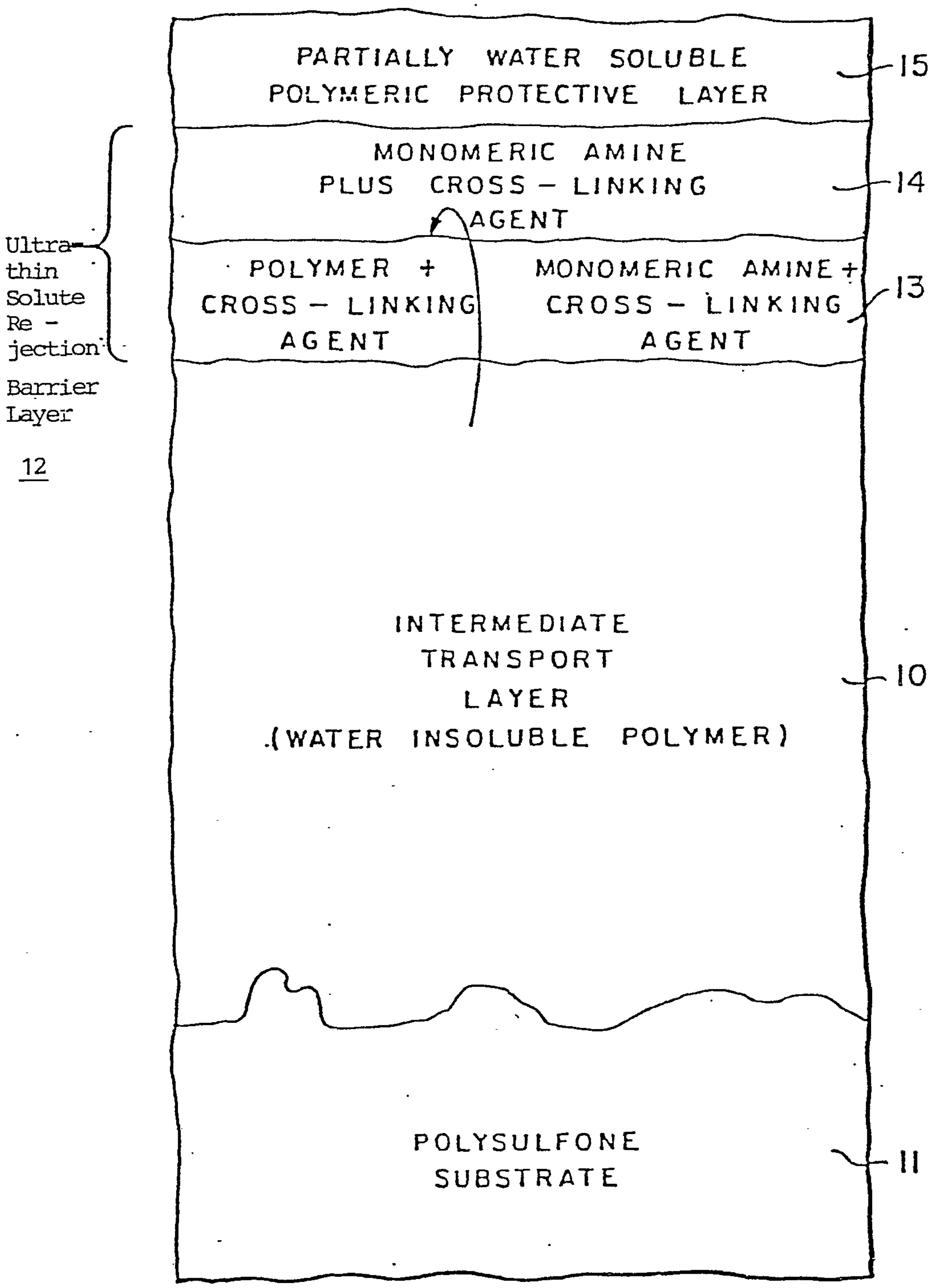
PARTIALLY WATER SOLUBLE POLYMERIC PROTECTIVE LAYER
15
MONOMERIC AMINE PLUS CROSS – LINKING AGENT
14
POLYMER + CROSS – LINKING AGENT
MONOMERIC AMINE + CROSS – LINKING AGENT
13
Ultra-thin Solute Re-jection Barrier Layer
12
INTERMEDIATE TRANSPORT LAYER (WATER INSOLUBLE POLYMER)
10
POLYSULFONE SUBSTRATE
11

FIG. 4

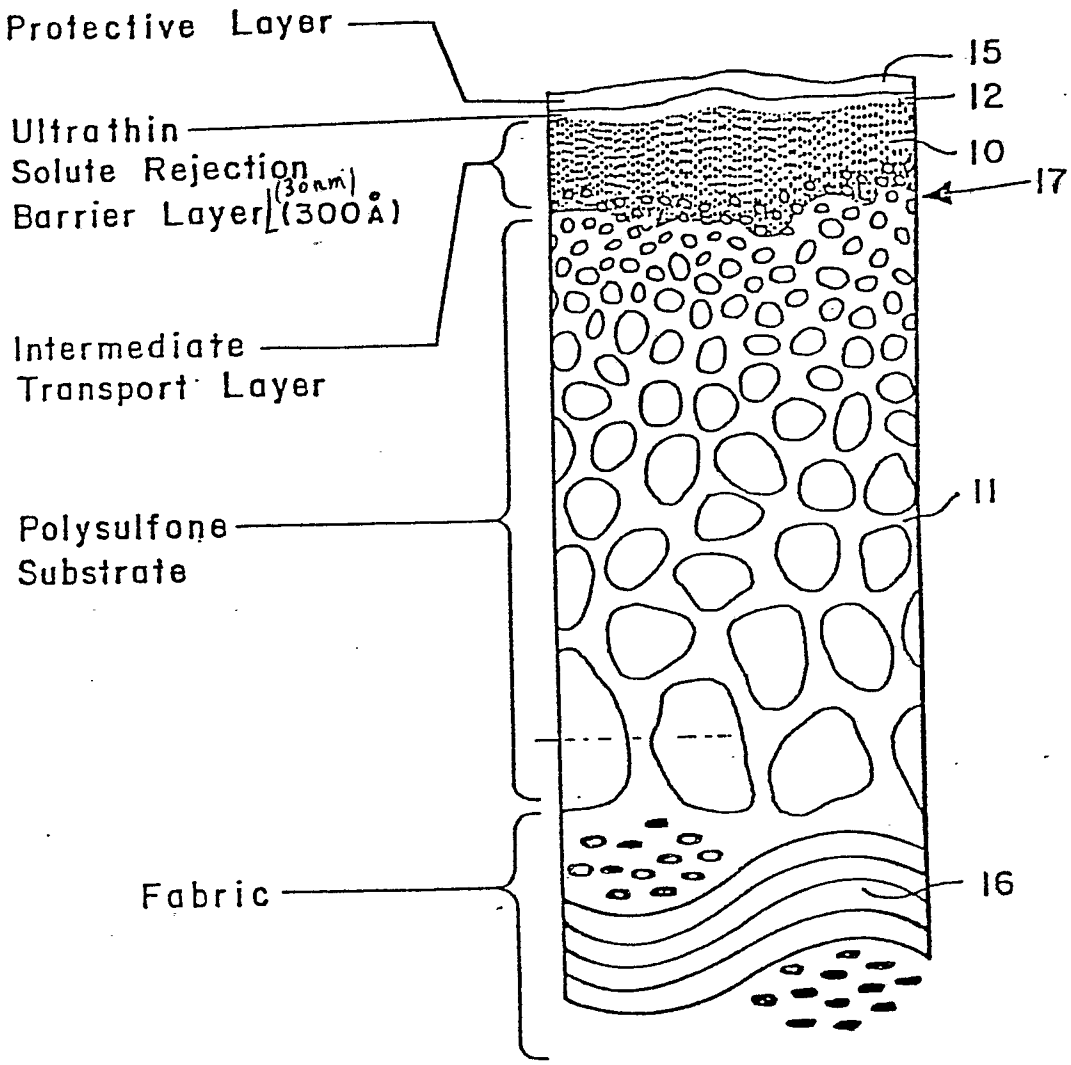

Protective Layer
15
12
Ultrathin Solute Rejection Barrier Layer (30nm) (300 Å)
10
17
Intermediate Transport Layer
Polysulfone Substrate
11
Fabric
16